# EUROPEAN PATENT APPLICATION

(11) **EP 3 418 402 A1**
(43) Date of publication of application: **26.12.2018**
(21) Application number: 17177525.7
(22) Date of filing: 22.06.2017
(51) Int. Cl.: C21B 5/00

(54) **PROCESS FLUID INJECTION INTO SHAFT FURNACE WITH INJECTOR STATUS TEST**

(71) Applicant: L'AIR LIQUIDE, SOCIETE ANONYME POUR L'ETUDE ET L'EXPLOITATION DES PROCEDES GEORGES CLAUDE, 75007 Paris (FR); Air Liquide Deutschland GmbH, 40235 Düsseldorf (DE)
(72) Inventor: RHEKER, Frank, 40227 DÜSSELDORF (DE)
(74) Representative: De Vleeschauwer, Natalie Y.L.D.

(57) **Abstract**

Injection of a process fluid into a shaft furnace by means of n injectors, whereby the status of said n injectors is tested by supplying a test fluid to each injector at a predetermined pressure, measuring a corresponding test fluid flow rate through the injector and comparing the measured test fluid flow rate with a predetermined safe flow-rate range or supplying the test fluid to each injector at a predetermined flow rate, measuring the pressure drop over the injector or a nozzle part thereof and comparing the measured pressure drop with a predetermined safe pressure-drop range.

## Description

The present invention relates to the operation of shaft furnaces, such as cupolas and blast furnaces. It is known in the art to inject fluids, such as, for example an oxygen-rich gas in a shaft furnace.

In order to ensure a relatively high degree of penetration of the fluid into the shaft furnace, it is more specifically known to inject fluids into a shaft furnace at sonic or supersonic velocity.

The injection is effected by means of a set of lances, also referred to as injectors or tuyeres which are distributed around the circumference of the furnace.

These injectors have to operate under particularly harsh conditions and can easily be damaged. In particular, the high temperatures inside the shaft furnace may cause the injector to suffer thermal damage, such as cracking, partial melting or softening and deforming and deposits may be formed on and/or around the injector which deposits may partially or even totally block the injection opening of the injector or modify the direction in which the fluid is injected into the shaft furnace.

It will be appreciated that any damage to the injectors which affects the injection of the fluid into the shaft furnace can have a major detrimental impact on the furnace and on the process taking place therein. For example, a change in the orientation of the injection direction of the fluid may cause damage to the refractory walls of the furnace and reduce the efficiency of the process taking place in the furnace and the quality of the product obtained. Any damage to an injector nozzle, in particular a sonic or supersonic nozzle, may lower the injection velocity of the fluid and thus lower the penetration depth of the fluid in the shaft furnace. When the fluid injected by the injector includes a fuel, damage to the injector may also cause potentially catastrophic flashback.

It is therefore necessary to replace any injectors of which it is apparent that they have suffered damage. As many shaft furnaces operate continuously for extended periods of time, it is generally not possible to check the condition of the injectors from the inside of the furnace.

It is common practice, by way of preventative measure, to replace all injectors of a shaft furnace after a predetermined period of operation, the so-called maximum lifetime.

This maximum lifetime is selected, based on tests and/or previous experiences with injectors of the same type, so as to be short enough so that most injectors are replaced before the injectors have suffered any damage which leads to a noticeable deterioration of the furnace structure or of the process taking place in the furnace. A number of injectors will thus be replaced even though they are not yet damaged.

Shaft furnaces can have a significant number of injectors. Depending on the size and type of furnace and the process taking place therein, up to 14 or 16 injectors or even up to 24 or 26 or even more injectors for a same fluid to be injected into the shaft furnace is not uncommon.

Consequently, the replacement of said injectors entails substantial costs for the furnace operator, both as regards the material to be replaced and the labour required.

It would therefore be desirable to be able to use the injectors for a longer period of operation without increasing the safety risks, the risks of damage to the furnace structure or the risk of deterioration of the process taking place therein.

Thereto, the present invention proposes method of injecting a process fluid into a vertical shaft furnace in which a combustion process takes place and whereby the injectors used for injecting said process fluid into the shaft furnace are subjected to a status check without interrupting the operation of the shaft furnace.

The present invention thus relates to a method of injecting process fluid into a vertical shaft furnace in which a combustion process takes place.

Said shaft furnace presents n injectors, with n at least equal to 3, which are distributed around the circumference of the shaft furnace. The shaft furnace also presents a fluid distributor which is fluidly connected, on the one hand, to a source of the process fluid to be injected and, on the other hand, to the n injectors.

The shaft furnace further is part of an installation which includes a control unit programmed (a) to control a total amount of the process fluid injected into the shaft furnace through the n injectors by means of a first valve unit between the source of the process fluid and the fluid distributor and (b) to control flows of the process fluid from the fluid distributor to each of the n injectors by means of n individual valve units between the fluid distributor and the n injectors.

In accordance with the present invention, the control unit is also programmed to initiate and execute a status test for each one of the n injectors individually without interrupting the operation of the shaft furnace.

During a status test of one of the n injectors, a test fluid is supplied at a predetermined pressure or at a predetermined flow rate to said injector, said test fluid being therefore also injected into the shaft furnace through said injector.

When the test fluid is supplied to the injector at the predetermined pressure, a flow rate of the fluid through the injector is measured. When the test fluid is supplied to the injector at the predetermined flow rate, a pressure drop or back pressure over the injector or over at least a nozzle part of the injector is measured.

When the test fluid is supplied to the injector at the predetermined pressure and the flow rate of the fluid through the injector is therefore measured, the control unit verifies whether the measured flow rate falls inside a predetermined safe flow-rate range for the predetermined pressure. When the test fluid is supplied to the injector at the predetermined flow rate and the pressure drop is measured, the control unit verifies whether the measured pressure drop falls inside a predetermined safe pressure-drop range for the predetermined flow rate.

When the measured flow rate does not fall inside the predetermined safe flow-rate range or when the measured pressure drop does not fall inside the predetermined safe pressure-drop range, the control unit emits an output signal signaling that said injector, i.e. the injector of which the status has been tested, must be replaced.

Indeed, when the measured flow rate does not fall inside the predetermined safe flow-rate range or when the measured pressure drop does not fall inside the predetermined safe pressure-drop range, this is a clear indication that the injector has been damaged in such a way that the flow properties of the injector have been affected.

The present invention thus provides the furnace operator with a fair indication of the status of the n injectors during the combustion process.

The predetermined pressure, respectively the predetermined flow rate, typically correspond to a fluid pressure, respectively a fluid flow rate for which the injector was designed or commercialized.

The predetermined safe flow-rate range for the predetermined pressure and the predetermined safe pressure-drop range for the predetermined flow rate typically correspond to a range around the flow rate which is observed when the test fluid is supplied to a new, unused injector of the same type at the predetermined pressure, respectively to a range around the pressure drop which is observed when the test fluid is supplied to such a new, unused injector at the predetermined flow rate.

The control unit is advantageously programmed to repeat the status check for each one of the n injectors at predetermined intervals, thus informing the furnace operator of the evolution of the status of the n injectors during the combustion process.

Alternatively, or in combination therewith, the method may enable the initiation of a status check for each one of the n injectors by the control unit by instructing the control unit to do so, for example by means of a touch screen or a remote control device of the control unit. The furnace operator may in particular wish to initiate a status check of the injectors following or before an incident related to the shaft furnace, for example, after an injector has been replaced or before a change to the process takes place in the shaft furnace.

Due to the status check(s) performed by the control unit, the furnace operator no longer needs to rely solely on the experimentally determined maximum lifetime of the injectors and may decide to continue to use an injector beyond said maximum lifetime, provided the status check has shown that the injector continues to operate in the safe range.

The output signal generated by the control unit may be or may include a visual output signal on a screen of the control unit, optionally accompanied by a sound signal. The output signal may also be or include a signal which is transmitted to a remote, typically hand-held or mobile device.

The process fluid may, in particular, be an oxidizing gas consumed by the combustion process in the shaft furnace. The oxidizing gas preferably has an oxygen content greater than 21%vol and up to 100%vol, preferably of at least 90%vol and more preferably of at least 95%vol.

The source of oxidizing gas may be an installation for enriching air with oxygen, typically when the oxygen content of the oxidizing gas is relatively low, for example more than 21%vol and not more than 90%vol. The source of oxidizing gas may also be an air separation unit, a reservoir of liquefied oxygen or a pipeline transporting liquefied oxygen, for example when the oxygen content of the oxidizing gas is between 90%vol and 100%vol, preferably at least 95%vol.

The process fluid may also be or comprise a fuel which is injected into the shaft furnace.

The process fluid may also serve other purposes in the shaft furnace. For example, in the case of a shaft furnace for the reduction of iron ore, the process fluid may be a reducing agent which is injected into the shaft furnace to promote the reduction of the iron ore.

The shaft furnace typically has a substantially circular circumference, but may also have a different shape, such as for example a rectangular circumference.

The n injectors are preferably substantially evenly or uniformly distributed around the circumference of the shaft furnace, though other configurations are possible, depending on the furnace structure and the process requirements.

The number n of said injectors is generally greater than 3. A number of up to 14 or 16 injectors may be useful. However, the number n of injectors may also be significantly higher, for example up to 24 or even up to 36 or more.

The fluid distributor is advantageously a fluid distribution ring which surrounds the shaft furnace. According to a first embodiment of the method of the invention, the process fluid is used as test fluid. In that case, in order to ensure that the test fluid is effectively supplied to the injector of which the status is to be tested at the predetermined pressure or at the predetermined flow rate, the control unit closes the n-1 individual valves between the fluid distributor and the n-1 other injectors. As a consequence, during the supply of the test fluid to the injector of which the status is to be tested, all of the process fluid which is supplied to the fluid distributor flows only to the injector of which the status is to be tested and this at the predetermined pressure or at the predetermined flow rate. No process fluid flows from the fluid distributor to the n-1 other injectors during this period so that said n-1 other injectors do not cause interference with the ongoing status test. In order to ensure that the test fluid is effectively supplied to the injector of which the status is to be tested at the predetermined pressure or at the predetermined flow rate, the control unit my also adjust the first valve unit between the source of the process fluid to the fluid distributor to adjust the flow-rate and/or the pressure of the process fluid (used as test fluid) flowing into the fluid distributor.

The advantage of this embodiment is that no additional equipment is required for the status test. A disadvantage of this embodiment is that the flow of process fluid to the n-1 other injectors is temporarily interrupted. This is not a problem if this interruption, which must be repeated for the status test of each injector, is sufficiently short and if the process taking place in the shaft furnace is not very susceptible to such interruptions.

In other cases, the following embodiment whereby a fluid other than the process fluid is used as the test fluid may be more useful, even though this requires some additional equipment. According to said further embodiment, during the supply of test fluid to the injector to be tested, the control unit:
(a) closes the individual valve connecting the injector of which the status is to be tested to the fluid distributor so that no process fluid flows from the fluid distributor to said injector and
(b) opens a test-fluid valve between a source of test fluid and said injector so that the test fluid is supplied to said injector at the predetermined pressure or at the predetermined flow rate.

The flow of process fluid to the n-1 other injectors may thus continue under the control of the control unit during the status test and disturbance to the process in the shaft furnace is minimal.

Even though, in this case, the test fluid may have the same or a similar composition to the process fluid, it may be preferable to select a test fluid which does not react with other chemical components present in the shaft furnace so as to limit the impact of the status tests on the process in the shaft furnace even further.

The test fluid may, for example be air, N₂, CO₂ or recycled flue gas.

According to a convenient embodiment, the test fluid distributor is a test-fluid distribution ring which surrounding the shaft furnace, thereby facilitating the supply of test fluid to the n individual injectors during their respective status tests.

When it is considered that some, insubstantial damage to the injectors is allowable and does not require the replacement of such injectors, the predetermined safe flow-rate range or the predetermined safe pressure-drop range may have been selected so as to include the flow characteristics of injectors with such insubstantial damage. In that case, it may nevertheless be useful for the furnace operator to be able to distinguish between substantially intact and only insubstantially damaged injectors. Thereto, distinction may be made between standard ranges, which correspond to substantially intact injectors and warning ranges, which correspond to only insubstantially damaged injectors.

In that case, when the test fluid is supplied to the injector at the predetermined pressure, the predetermined safe flow-rate range consists of a predetermined standard flow-rate range and a predetermined warning flow-rate range on both sides of the standard flow-rate range. The control unit verifies whether the measured flow rate falls outside the standard flow-rate range but inside the warning flow-rate range. When the measured flow rate does indeed fall within the warning flow-rate range the control unit emits an output signal signaling that the injector of which the status has been tested no longer operates within its standard operation conditions

Similarly, when the test fluid is supplied to the injector at the predetermined flow rate, the predetermined safe pressure-drop range consists of a predetermined standard pressure-drop range and a predetermined warning pressure-drop range on both sides of the standard pressure-drop range. The control unit verifies whether the measured pressure drop falls outside the standard pressure-drop range but inside the warning pressure-drop range. When the measured pressure drop falls within the warning pressure-drop range, the control unit emits an output signal signaling that the injector of which the status has been tested no longer operates within its standard operation conditions.

The predetermined standard flow-rate range for the predetermined pressure and the predetermined standard pressure-drop range for the predetermined flow rate typically correspond to a range around the flow rate which is observed when the test fluid is supplied to a new, unused injector of the same type at the predetermined pressure, respectively to a range around the pressure drop which is observed when the test fluid is supplied to such a new, unused injector at the predetermined flow rate. The predetermined standard flow-rate range is however narrower than the predetermined safe flow-rate range and the predetermined standard pressure-drop range is narrower than the predetermined safe pressure-drop range.

For additional security, the method according to the present invention may also be combined with the earlier mentioned maximum lifetime approach. However, due to the information on the actual status of the injector made available through the method of the present invention, a longer maximum lifetime or maximum operation period may safely be selected.

In that case, the control unit preferably also tracks the operation time of each of the n injectors. When the actual operation time of one of the n injectors reaches a predetermined maximum operation time, the control unit generates an output signal identifying said injector as having reached its maximum operation time, whereupon said injector will typically be replaced by the furnace operator.

According to one embodiment, the control unit is programmed to initiate and execute the status test for each one of the n injectors in succession without interruption between two successive status tests of different injectors. Alternatively, the control unit can be programmed to initiate and execute the status test for each one of the n injectors with an interval free of status tests between two successive status tests of different injectors. This latter embodiment may be useful when extending the status checks over a longer period could have a negative impact on the process taking place in the shaft furnace.

The shaft furnace may be a waste combustion furnace. However, the invention is particularly useful when the furnace is a furnace in which a charge material, other than the fuel which is combusted with the oxidizing agent, is transformed. The invention is thus particularly useful when the shaft furnace is a glass-melting furnace, a mineral-wool-melting furnace or a metal-melting furnace.

The shaft furnace may be a cupola. The shaft furnace may also be an iron melting blast furnace.

## Claims

1. Method of injecting a process fluid into a vertical shaft furnace in which a combustion process takes place, whereby:
• the shaft furnace presents n injectors substantially uniformly distributed around the circumference of the shaft furnace of the shaft furnace, with n ≥ 3, and a fluid distributor which is fluidly connected, on the one hand, to a source of the process fluid to be injected and, on the other hand, to the n injectors,
• the shaft furnace is part of an installation which includes a control unit programmed to control (a) a total amount of the process fluid injected into the shaft furnace through the n injectors by means of a first valve unit between the source of the process fluid to the fluid distributor and (b) to control flows of the process fluid from the fluid distributor to each of the n injectors by means of n individual valve units between the fluid distributor and the n injectors,
**characterized in that**:
• the control unit is also programmed to initiate and execute a status test for each one of the n injectors individually while the combustion process takes place in the shaft furnace, status test during which:
o a test fluid is supplied at a predetermined pressure or at a predetermined flow rate to the injector of which the status is tested,
o when the test fluid is supplied to the injector at the predetermined pressure, a flow rate of the fluid through the injector is measured and when the test fluid is supplied to the injector at the predetermined flow rate, a pressure drop over the injector or over at least a nozzle part of the injector is measured;
o when the test fluid is supplied to the injector at the predetermined pressure and the flow rate of the fluid through the injector is measured, the control unit verifies whether the measured flow rate falls inside a predetermined safe flow-rate range for the predetermined pressure and when the test fluid is supplied to the injector at the predetermined flow rate and the pressure drop is measured, the control unit verifies whether the measured pressure drop falls inside a predetermined safe pressure-drop range for the predetermined flow rate,
o when the measured flow rate does not fall inside the predetermined safe flow-rate range or when the measured pressure drop does not fall inside the predetermined safe pressure-drop range, the control unit emits an output signal signaling that the injector of which the status has been tested must be replaced.

2. Method according to claim 1, whereby the control unit is programmed to repeat the status check for each one of the n injectors at predetermined intervals.

3. Method according to claim 1 or 2, whereby the fluid distributor is a fluid distribution ring surrounding the shaft furnace.

4. Method according to any one of the preceding claims, whereby the process fluid is used as test fluid and whereby during the supply of the test fluid to the injector of which the status is to be tested, the control unit closes the n-1 individual valves between the fluid distributor and the n-1 other injectors so that all process fluid supplied to the fluid distributor flows to the injector of which the status is to be tested at the predetermined pressure or at the predetermined flow rate and no process fluid flows from the fluid distributor to the n-1 other injectors.

5. Method according to any one of claims 1 to 3, whereby a fluid other than the process fluid is used as the test fluid and whereby, during the supply of test fluid to the injector to be tested, the control unit (a) closes the individual valve connecting the injector of which the status is to be tested to the fluid distributor so that no process fluid flows from the fluid distributor to said injector and (b) opens a test-fluid valve between a source of test fluid and said injector so that the test fluid is supplied to said injector at the predetermined pressure or at the predetermined flow rate.

6. Method according to claim 5, whereby the test fluid does not react with other chemical components present in the shaft furnace.

7. Method according to claim 5 or 6, whereby the test fluid distributor is a test-fluid distribution ring surrounding the shaft furnace.

8. Method according to any one of the preceding claims, whereby
o whereby the test fluid is supplied to the injector at the predetermined pressure and the predetermined safe flow-rate range consists of a predetermined standard flow-rate range and a predetermined warning flow-rate range on both sides of the standard flow-rate range, and whereby the control unit verifies whether the measured flow rate falls outside the standard flow-rate range but inside the warning flow-rate range, or
o whereby the test fluid is supplied to the injector at the predetermined flow rate and the predetermined safe pressure-drop range consists of a predetermined standard pressure-drop range and a predetermined warning pressure-drop range on both sides of the standard pressure-drop range, and whereby the control unit verifies whether the measured pressure drop falls outside the standard pressure-drop range but inside the warning pressure-drop range,
and whereby:
o when the measured flow rate falls within the warning flow-rate range or when the measured pressure drop falls within the warning pressure-drop range, the control unit emits an output signal signaling that the injector of which the status has been tested no longer operates within its standard operation conditions.

9. Method according to any one of the preceding claims, whereby the control unit further tracks the operation time of the n injectors and whereby when the operation time of one of the n injectors reaches a predetermined maximum operation time, the control unit generates an output signal identifying said injector as having reached its maximum operation time.

10. Method according to any one of the preceding claims, whereby the control unit initiates and executes the status test for each one of the n injectors in succession, without interruption between two successive status tests of different injectors.

11. Method according to any one of claims 1 to 9, whereby the control unit initiates and executes the status test for each one of the n injectors with an interval without status tests between two successive status tests of different injectors.

12. Method according to any one of the preceding claims, whereby the shaft furnace is a cupola.

13. Method according to any one of claims 1 to 11, whereby the shaft furnace is an ironmelting blast furnace.

14. Method according to any one of the preceding claims, whereby the working fluid is a combustion oxidant presenting an oxygen content higher than 21%vol and at most 100%vol.
